Europäisches Patentamt

European Patent Office  (11) Publication number: **0 028 043**

Office européen des brevets  **B1**

(19)

(12) **EUROPEAN PATENT SPECIFICATION**

(45) Date of publication of patent specification: **25.04.84**  (51) Int. Cl.³: **A 23 L 1/22, A 23 F 5/48**

(21) Application number: **80200958.9**

(22) Date of filing: **13.10.80**

(54) Method for aromatizing a coffee substrate.

(30) Priority: **25.10.79 US 88249**

(43) Date of publication of application:
**06.05.81 Bulletin 81/18**

(45) Publication of the grant of the patent:
**25.04.84 Bulletin 84/17**

(84) Designated Contracting States:
**BE DE FR GB IT NL**

(56) References cited:
**DE - B - 1 032 077**
**FR - A - 2 077 861**
**US - A - 2 306 061**
**US - A - 3 783 163**
**US - A - 3 823 241**
**US - A - 3 873 746**

(73) Proprietor: **THE PROCTER & GAMBLE COMPANY**
**301 East Sixth Street**
**Cincinnati Ohio 45202 (US)**

(72) Inventor: **Stipp, Gordon Keith**
**7380 Jean Drive**
**Westchester Ohio 45069 (US)**
Inventor: **Tse, Hing Cheung**
**2366 Mt. Vernon Drive**
**Fairfield Ohio 45014 (US)**

(74) Representative: **Brooks, Maxim Courtney et al,**
**Procter & Gamble (NTC) Limited Whitley Road**
**Longbenton**
**Newcastle-upon-Tyne NE12 9TS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# 0 028 043

## Method for aromatizing a coffee substrate

The present application relates to the field of aromatization of coffee.

A frequent problem in food processing is the loss of aroma and/or flavor volatiles. In the case of coffee, these volatiles can be lost at a number of points in the processing. One point is when the coffee beans are roasted. See U.S. Patent 2,087,602 to McCrosson, issued July 20, 1937, which discloses a process for enriching the aroma and flavor of coffee by drenching roast and ground coffee with aroma-laden gases liberated during green bean roasting in a sealed coffee roaster. Roasting produces gaseous aromas which are generally harsh and unpleasant-smelling but can be fractionated to recover useful aroma volatiles. See U.S. Patent 2,156,212 to Wendt et al, issued April 25, 1939, which discloses a process wherein vapors from roaster gases are collected and purified and then contacted with liquid coffee concentrate, coffee powder or roast and ground coffee.

Another point where aroma and flavor volatiles are lost is during the grinding of the roasted beans. Although grinding is necessary to liberate more solubles for extraction, a substantial portion (about 50%) of the aroma volatiles are frequently lost. See U.S. Patent 2,306,061 to Johnston, issued December 12, 1942, wherein compounds or vapors released during grinding of roasted coffee are brought into contact with coffee or beverage extract, e.g. soluble coffee, in a vessel cooled to $-70°C$ ($-94°F$) to $-15°C$ ($-20°F$) by dry ice or brine.

Another point where aroma and flavor volatiles can be lost is during milling of coffee to produce flaked coffee. Although flaked coffee has increased extractability, the aroma intensity of the coffee is much less than that of roast and ground coffee due to loss of aroma and flavor volatiles (about 75% of total available during milling. See U.S. Patent 3,615,667 to Joffe, issued October 26, 1971, wherein flaked low and intermediate grade coffees which are poor in aroma quality are combined with high grade coffees having good aroma qualities.

Two principal methods are used to correct the problem of aroma and flavor volatile loss in coffee processing. The first method involves low temperature grinding to prevent excessive release of aroma volatiles. One example is the grinding of roasted coffee beans in the presence of liquid nitrogen. See British Patent Document 1,424,264 to Strobel, published February 11, 1976. Another example is the co-grinding of coffee beans with dry ice. See U.S. Patent 3,725,076 to Stefanucci et al, issued April 3, 1973.

Low temperature grinding to prevent excessive release of aroma and flavor volatiles can have a number of disadvantages. In the case of liquid nitrogen grinding, special equipment is necessary, adding to the expense of the processing. Also, the aroma character of the volatiles produced during low temperature grinding can be significantly different from aroma volatiles produced by grinding at ambient temperatures. Further, there is a practical limit to the amount of volatiles which can be retained.

The other principal method for dealing with the problem of the loss of aroma and flavor volatiles is by recovery on a food substrate. One example is direct condensation of gaseous and flavor volatiles on a chilled food substrate, as suggested by the Johnson patent. Typically, cryogenic temperatures (e.g. below $-101,1°C$ ($-150°F$)) are employed. See European Patent Application Publication Number 10804, commonly assigned, which discloses a method for forming highly aromatized coffee products by adsorbing grinder gas onto a packed column of coffee cooled by liquid nitrogen. See also U.S. Patent 3,823,241 to Patel et al, issued July 9, 1974, wherein an absorbent carrier is cooled to at least $-40°C$ ($-40°F$) (preferably $-101,1°C$ ($-150°F$)) and then placed in communication with roast and ground coffee under pressure conditions to transfer the coffee aroma to the absorbent carrier. Another example is aroma frost equilibration with an aroma substrate which is typically a liquid glyceride such as coffee oil. See U.S. Patent 3,783,163 to Patel, issued January 1, 1974, which discloses a method for aromatizing edible oils by adding the oil to a cryogenic fluid to form a slurry, adding an aroma frost to the slurry, preferably with mixing, and then allowing the mixture to equilibrate to evaporate the cryogenic fluid, leaving behind a residue of aroma-enhanced oil.

The use of liquid nitrogen for aroma and flavor volatile recovery results in high capital and operational cost for large-scale processing because of the heat transfer limitations. For example, in the case of aroma frost equilibration with coffee, the standard equipment for condensing and thus forming the aroma frost is a scraped-wall heat exchanger. The relatively small surface area of the wall of the exchanger serves as a heat transfer barrier, thus necessitating the use of liquid nitrogen as the coolant. Even when liquid nitrogen is used, significant heat transfer limitations can remain. For example, in the case of direct condensation of gaseous and flavor volatiles onto a packed column of coffee, thermal gradients are created because of low effective bed thermal conductivity of the packed column which result in non-uniform adsorption of the and flavor volatiles onto the coffee.

Further, the low temperatures created by liquid nitrogen processing tend to magnify the heat transfer problems. The volatile stream used in direct condensation or aroma frost formulation usually contains predominant amounts of other compounds which do not contribute to the aroma and flavor. For example, a grinder gas stream of coffee aroma normally contains 85% air, 3% water, 12% $CO_2$ and only about 0.1% aroma and flavor volatiles. These other compounds can condense at liquid nitrogen temperatures, thus creating an additional sensible heat load necessitating the use of more liquid nitrogen at an additional cost.

In a more economical method for direct condensation of food and flavor volatiles on a solid food substrate at cryogenic temperatures, a bed of particulated solid substrate is placed in a vessel cooled by a cryogenic fluid such as liquid nitrogen. The substrate is then fluidized to provide an absorbent bed thereof. Gaseous food and flavor volatiles are then adsorbed onto the cooled, fluidized bed of substrate which has a temperature preferably below $-101,1°C$ ($-150°F$). The aromatized substrate formed is then preferably equilibrated to insure uniformity of aromatization, binding of and flavor volatiles to the substrate and storage stability.

This process is a more practical method for direct condensation of aroma and flavor volatiles on a solid food substrate at cryogenic temperatures compared to the liquid nitrogen volatile recovery techniques discussed previously. However, in the above process, the cryogenic fluid is typically circulated through the jacket of the vessel to provide the desired cooling. Because there is no direct intimate contact between the coolant and substrate, thermal barriers are formed (e.g. at the jacket of the vessel) which decrease the effective heat transfer rate during condensation/absorption of the aroma and flavor volatiles on the substrate. Also, although this process is more economical, the requirement of a cryogenic fluid as the coolant still adds a significant cost factor. Commercially practical methods for direct condensation of gaseous and flavor volatiles, especially coffee aroma, on a solid coffee substrate, which utilize a less expensive coolant are still needed.

It is therefore an object of the present invention to recover aroma and flavor volatiles on a coffee substrate without the need of a cryogenic fluid such as liquid nitrogen as the primary coolant.

It is a further object of the present invention to recover aroma and flavor volatiles on a coffee substrate without affecting the quality of the and flavor volatiles recovered.

It is a further object of the present invention to adsorb aroma and flavor volatiles on a coffee substrate as efficiently and as economically as possible.

It is yet a further object of the present invention to provide an aromatized product having an enhanced aroma.

These and further objects of the present invention are disclosed hereafter.

Disclosure of the invention

A. Summary of the invention

The present invention relates to a novel method for aromatizing a coffee substrate by rapidly agitating particulate dry ice or an intimate particulate mixture of dry ice and solid coffee substrate to form an adsorbent bed, contacting the adsorbent bed with gaseous coffee volatiles to adsorb the aroma and flavor volatiles onto the adsorbent bed and vaporizing the dry ice to provide an aromatized coffee substrate. The adsorbent bed is preferably fluidized. The fluidized or agitated adsorbent bed preferably has a bed temperature of from about $-101,1°C$ ($-150°F$) to about $-17,8°C$ ($0°F$), and is contacted with food volatiles so as to adsorb the volatiles. Where the adsorbent bed is solely solid coolant, the food substrate to be aromatized is added to the adsorbent bed after contact with the volatiles. The solid coolant is then removed so as to provide an aromatized food substrate.

The process of the present invention typically employs higher temperatures for volatile collection on a variety of food substrates when compared to liquid nitrogen volatile recovery techniques. Also, the adsorbent bed is rapidly agitated or fluidized to provide intimate contact between coolant and substrate which promotes heat transfer away from the mixture of coolant/substrate during condensation/adsorption of the volatiles. By promoting heat transfer away from the coolant/substrate mixture, the volatiles adsorb more uniformly and more rapidly onto the substrate at temperatures typically higher than those of liquid nitrogen volatile recovery techniques. Further, the process of the present invention is usually more economical for volatile recovery than liquid nitrogen volatile recovery techniques.

The process of the present invention is especially useful for creating novel aromatized roast and ground and flaked coffee products. These coffee products are characterized by a sharper aroma and by the presence of lesser amounts of low-boiling aroma and flavor volatiles and higher amounts of high-boiling food volatiles when compared to aromatized coffee products formed by liquid nitrogen volatile recovery techniques. Yet aromatized coffee products formed according to the process of the present invention are generally perceived as having good fidelity aroma when compared to aromatized coffee products formed by liquid nitrogen volatile recovery techniques. Aromatized coffee products made according to the process of the present invention are particularly useful when diluted with unaromatized coffee materials to form a composite aromatized coffee product.

B. Substrates

The process of the present invention is useful for coffee substrate materials, including decaffeinated varieties. These coffee materials can include roast and ground coffee, flaked coffee, instant (soluble) coffee, expeller cake, as well as roasted grains, such as sprouted barley, rye, corn and chicory, or combinations of different coffee substrates with these roasted grains. Also, coffee substrates comprising edible oils, i.e. an edible oil alone or an edible oil sprayed on or added to another coffee substrate, can be employed in the process of the present invention. Coffee oil, alone or in combination with an additional coffee substrate, as well as roast and ground and flake coffee, are preferred.

Roast and ground coffee can be made by methods well known in the art. See, for example, "Coffee Processing Technology", Sivetz & Foote, The Avi Publishing Co., Westport, Connecticut, 1963, Vol. I, pp 203—239, for an illustration of grinding techniques. A variety of roast and ground coffee blends, including those which may be classified for convenience and simplification as low-grade, intermediate grade, and high-grade coffees can be used. Suitable examples of low-grade coffees include the natural Robustas such as the Ivory Coast Robustas and Angola Robustas, and the natural Arabicas such as the natural Perus and natural Ecuadors. Suitable intermediate-grade coffees include the natural Arabicas from Brazil such as Santos, Paranas and Minas, and natural Arabicas such as Ethiopians. Examples of high-grade coffees include the washed Arabicas such as Mexicans, Costa Ricans, Colombians, Kenyas and New Guineas. Other examples and blends thereof are known in the art and illustrated in, for example, U.S. Patent 3,615,667 to Joffe, issued October 26, 1971 and incorporated herein by reference.

Roast and ground coffee which has been transformed into flaked coffee by roll milling roast and ground coffee is known in the art. Processes for preparing flaked coffee are disclosed in U.S. Patent 3,615,667 to Joffe, issued Oct. 26, 1971, and in U.S. Patent 3,660,106, to McSwiggin et al, issued May 2, 1972, incorporated herein by reference.

C. Volatiles

Coffee aroma and flavor volatiles are the preferred for use herein. These coffee volatiles can be derived from a variety of sources. For example, with regard to roast and ground coffee processing, volatiles can be obtained from gases evolved during roasting, grinding, flaking, bulk handling and other processing steps. With regard to instant coffee processing, volatiles can be obtained during dry distillation or steam distillation of roast and ground coffee beans, such as Desorbate volatiles obtained from the process described in U.S. Patents 3,717,472, issued Feb. 20, 1973, and 3,997,685, issued Dec. 14, 1976 to Strobel, and U.S. 4,100,305, issued to Gregg, July 11, 1978, or from extraction stripping condensate, stripped coffee oil and/or similar sources.

A preferred source of coffee volatiles is grinder gas. As used in the present application, the term "grinder gas" is defined as those aroma and flavor volatiles liberated during and after the grinding of the roasted coffee beans. Preferentially, the grinder gas is that gas drawn directly from the grinder but can include gas from such sources as flaking mills and coffee bins. This gas is preferred because it contains the richest and most intense source of those aroma and flavor constituents perceived by the user as most desirable. Also, the utilization of this gas represents the recovery of material normally lost during conventional roast and ground coffee processing.

D. Coolant

The coolant used in the process of the present invention must be in the form of a particulate solid and must have the ability to dissipate the heat load created during the condensation/adsorption of the aroma and flavor volatiles onto the adsorbent bed. The smaller the particle size of the coolant, the more intimate will be the contact with the coffee substrate. When coolant and substrate form the adsorbent bed, the ratio of coolant to substrate can vary depending on the coolant used, the processing conditions employed, the amount of volatiles to be adsorbed, etc. Generally, the coolant/substrate ratio can range from about 1:2 to about 10:1 by weight at the beginning of the process of the present invention. In most instances, the amount of the solid coolant is preferably in excess of the amount of substrate so that the temperature of the mixture remains fairly constant.

The coolant is dry ice (solidified carbon dioxide having a sublimation temperature of $-78,9°C$ ($-110°F$)) in powder form. In particular, the use of dry ice provides an adequate vehicle for dissipating the heat load created during condensation/adsorption of coffee aroma and flavor volatiles (usually much hotter than the dry ice/coffee substrate mixture).

E. Description of process
1. Cryofication of substrate

It is a preferred preliminary step in the process of the present invention to precool the substrate with a cryogenic fluid. For example, the substrate can be added directly to the cryogenic fluid, preferably liquid nitrogen, in a process called "cryofication". Cryofication is a particularly preferable method for forming particulated edible oil substrates because the cryogenic fluid fractures the oil into very small particles (preferably 500 microns in size or less) providing a large surface area and a porous structure in the particles which increases the adsorption of the volatiles. See U.S. Patent 3,783,163 to Patel, issued Jan. 1, 1974, Col. 3, lines 10—27, herein incorporated by reference, which describes a process for cryofication of an edible oil such as coffee oil. Other methods for cryofying the substrate include grinding in the presence of a cryogenic fluid and co-spraying the substrate with a cryogenic fluid.

2. Rapid agitation

An important step in the method of the present invention is the rapid agitation of the coolant or mixture of coolant and substrate to form the adsorbent bed. The agitation should be sufficient to permit effective dissipation of heat during condensation/adsorption of the volatiles, as well as to allow separation of vaporized coolant from the adsorbent bed. Where the adsorbent bed is coolant and substrate, the agitation should be sufficient to intimately mix the coolant with the substrate. The agitation employed in the process of the present invention typically creates constant turbulence of the coolant or coolant/substrate mixture.

A variety of methods can be used to provide rapid agitation of the adsorbent bed. For example, mechanical mixing in the form of stirring, tumbling, vibrating, shaking and the like, can be employed. Devices for accomplishing mechanical mixing include ribbon blenders, paddle mixers, tumbling mixers and screw conveyors. Other methods for accomplishing rapid agitation other than mechanical mixing can also be employed. For example, gaseous volatiles can be passed upwardly through the mixture of coolant and substrate at a velocity sufficient to cause intimate mixing.

3. Fluidized adsorbent beds

It is usually desirable in the process of the present invention to rapidly agitate the coolant or mixture of coolant and coffee substrate to provide a fluidized absorbent bed. The term "fluidization" refers to a process where solid particles are made to behave in a fluid-like manner. A fluidized bed, such as a bed of particulated coolant and solid coffee substrate, behaves much like that of a boiling liquid. Fluidization normally takes place when the force of the fluidizing gas exceeds the weight and friction factors within the bed of solid particles. For example, gaseous aroma and flavor volatiles can be passed upwardly through the mixture of coolant and food substrate at a velocity of sufficient to form a fluidized bed thereof. This type of fluidization is referred to hereinafter as "gaseous fluidization". For a gaseous fluidization system, fluidization velocities of about 61 to 152 cm (2 to 5 ft.)/sec. are usually sufficient to provide the desired fluidized adsorbent bed, e.g. dry ice and roast and ground coffee. See *Perry's Chemical Engineer's Handbook* (4th ed. 1963), pp. 20—64 to 20—74 for a further description of fluidized beds.

4. Mechanical fluidization

A preferred method for forming a fluidized adsorbent bed is mechanical fluidization, i.e. rapid agitation with a mechanical mixing system. In mechanical fluidization, the coolant or mixture of coolant and substrate is continuously hurled and whirled so as to create the fluidized system normally formed by gaseous fluidization. If desirable, combinations of both mechanical and gaseous fluidization can be employed in the process of the present invention.

To achieve mechanical fluidization in the process of the present invention, certain types of mixers are usually needed. For example, one suitable mixer employs an impeller in the form of a centrally rotating shaft having a plurality of radially extending arms attached thereto. Crescent-shaped scoops are attached to the ends of the arms. See U.S. Patent 3,273,863 to Lodige et al, issued Sep. 20, 1966 which discloses a mixer employing an impeller having such crescent-shaped scoops. Another suitable mixer employs an impeller which has scoops in the form of a double-bladed plow. See U.S. Patents 3,018,059, issued Jan. 23, 1962, 3,027,102, issued March 27, 1962, and 3,162,428, issued Dec. 22, 1964 Lodige et al, which disclose mixing devices employing impellers having double-bladed plow-shaped scoops.

5. Condensation and adsorption of the volatiles on the rapidly agitated or fluidized adsorbent bed

While the adsorbent bed is in a rapidly agitated or fluidized state, the aroma and flavor volatiles are brought into contact therewith so as to be condensed/adsorbed. It is usually desirable to remove any moisture from the volatiles prior to contact with the adsorbent bed to decrease undesirable heat loads and to minimize plugging, i.e. ice freeze-up, of the fluidized bed of substrate. The adsorbent bed can be aromatized either in a batch-wise fashion or by a continuous method. The amount of contact time between the volatiles and the adsorbent bed depends on a variety of factors, including the amount of aromatization desired, the temperature of the bed, the type of substrate aromatized, etc. The length of contact time is preferably maximized to assure greater adsorption of the volatiles on the bed of substrate. The gas loading (flow) rate of the volatiles through the rapidly agitated or fluidized adsorbent bed can also be important with regard to bed temperature and heat transfer characteristics thereof. Generally, it is desirable to optimize the gas loading rate of the volatiles through the adsorbent bed to promote lower bed temperatures and greater heat transfer rates during condensation/adsorption of the volatiles on the adsorbent bed. Further, the vessel in which condensation/adsorption of the volatiles occurs is preferably insulated to minimize intrusion of heat from the surroundings.

The temperature at which the adsorbent bed is maintained during condensation/adsorption will depend upon the particular volatiles to be adsorbed, the processing conditions employed and the coolant selected. Generally, in the process of the present invention, the adsorbent bed has a temperature in the range of from about $-101,1°C$ $(-150°F)$ to about $17,8°C$ $(0°F)$, i.e. above typical liquid nitrogen temperatures. In the case of coffee volatiles, the temperature of the adsorbent bed is preferably maintained below about −62,2°C (−80°F) to recover most of the volatile components, e.g. hydrogen sulfide, but above about −78,9°C (−110°F) to prevent condensation of excessive amounts of carbon dioxide. Thus, dry ice is a particularly preferable coolant for aromatizing a coffee substrate in the process of the present invention.

During condensation/adsorption of the volatiles, the temperature of the adsorbent bed can be slightly above the vaporization point of the coolant. For example, in a rapidly agitated or fluidized mixture of dry ice/roast and ground coffee, the temperature of the mixture is typically from about −78,9°C (−110°F) to about −62,2°C (−80°F). Generally, the solid coolant provides a sufficiently low temperature for the purposes of adsorbing the volatiles onto the adsorbent bed. If desirable, additional cooling can be provided by cooling the exterior of the vessel in which condensation/adsorption occurs. Also, any volatiles which do not adsorb onto the adsorbent bed initially can be recycled.

Although the volatiles can be brought into contact with the adsorbent bed at atmospheric pressure, pressurization and concentration of the aroma and flavor volatiles can also be employed without degradation thereof. Aroma and flavor volatiles can be pressurized up to about 687 kPa (100 psig) or higher. Pressurization of the aroma and flavor volatiles promotes adsorption of the volatiles onto the adsorbent bed, particularly a mixture of coolant and substrate. Also, because volatile transfer is promoted, pressurization of the aroma and flavor volatiles can reduce coolant usage, as well as increase volatile processing capacity.

If desirable, condensation/adsorption of the volatiles can be conducted under a vacuum. For example, a vacuum can be drawn on the vessel containing the adsorbent bed so as to pull the volatiles through the bed. When a vacuum is employed in the process of the present invention, significantly lower adsorbent bed temperatures can result. For example, an adsorbent bed of dry ice and coffee can be lowered to a temperature of almost −150°F.

Where the adsorbent bed is solely coolant, a food substrate to be aromatized is added after condensation/adsorption of the volatiles. The remaining steps for providing the aromatized substrate are generally the same as those where the adsorbent bed is a mixture of coolant and substrate as long as the volatiles adsorbed onto the coolant are allowed to transfer to the substrate. If desirable, additional unaromatized food substrate can also be added to an adsorbent bed of coolant and substrate.

5. Removing the coolant and equilibration

A variety of methods can be employed for removing the coolant so as to provide the aromatized coffee substrate. A preferable method is vaporization where the coolant is sublimable. Generally, vaporization of the coolant should be conducted under conditions which promote transfer of the aroma and flavor volatiles onto the substrate but do not promote volatile stripping. During vaporization, volatiles which condense on the coolant will transfer to the substrate.

Two particular methods have been developed for vaporizing the coolant. In one method, the volatile/coolant/substrate matrix is allowed to equilibrate at temperatures above the vaporization point of coolant for at least a period of time sufficient to evaporate the coolant residue and leave behind a substrate enriched with volatiles. No special criticality is associated with the precise temperature employed as long as the temperature is above the vaporization point of the coolant. Temperatures up to ambient can be used, although temperatures of from about −73,3°C (−100°F) to about −17,8°C (0°F) are preferred. During the vaporization step, all undesired gases which are present can be removed, such as nitrogen, air, excess $CO_2$, etc. Preferably, 4 to 8 days are allowed for equilibration to permit maximum volatile transfer to the substrate. After the coolant has been completely evaporated, the volatile-enriched substrate can be packed, or added to an unaromatized product, e.g. instant or roast and ground coffee, to yield aroma and/or flavor enhancement for the unaromatized product and then packed.

An alternative method is pressure fixation where the aroma and flavor volatile containing solid coolant/solid substrate matrix is added to a pressure vessel. See U.S. Patent 3,939,291 to Katz, issued Feb. 17, 1976; U.S. Patent 3,979,528 to Mahlmann, issued Sept. 7, 1976, U.S. Patent 4,007,291 to Siedlecki et al, issued Feb. 8, 1977, which describe pressure fixation techniques for coffee aroma frost on liquid glycerides. The contents of the vessel are gently heated by circulating a moderate heating medium (e.g. 23,9°C (75°) to 79,4°C (175°F) hot process water) through the jacket of the vessel and agitated until the internal pressure is between 687 (100) and 2061 kPa (300 psig). Excess coolant is volatilized by both the agitation and heating process. Isobaric expansion of excess coolant in the venting process removes heat from the vessel contents, thus maintaining the internal temperature sufficiently low to minimize thermal degradation of the aroma and flavor volatiles. After all excess coolant has been vented, the vessel contents can be packed or added to unaromatized product to enhance the aroma and/or flavor thereof and then packed.

In an optional method according to the present invention, the entire aromatization process can be conducted in a pressure vessel. For example, a mixture of dry ice and coffee substrate are added to the pressure vessel. Coffee volatiles under pressure are continuously fed into the vessel. Generally, pressures up to 515 kPa (75 psig) or higher can be employed before dry ice turns into a liquid/gas

6

carbon dioxide mixture. The coolant/substrate mixture is then rapidly agitated or fluidized within the vessel. After a period of time sufficient to allow adsorption of the coffee volatiles onto the mixture, the excess coolant can be vaporized as in the foregoing described pressure fixation technique.

The process of the present invention has a number of advantages over liquid nitrogen techniques for aroma and flavor volatile recovery. The process of the present invention tends to dissipate heat created by volatile condensation/adsorption more effectively. Coolant is brought into direct contact with the coffee substrate. Also, rapid agitation or fluidization of the adsorbent bed insures that contact between coolant and coffee substrate is more intimate. These two factors promote heat transfer away from the coolant/substrate mixture during condensation/adsorption of the volatiles.

The process of the present invention tends to promote greater uniformity of aroma and flavor volatile adsorption onto the coffee substrate. As indicated previously, a packed bed of coffee cooled by liquid nitrogen has numerous thermal gradients which result in non-uniform adsorption of food volatiles. By contrast, due to the rapid agitation or fluidization of the mixture of coolant and substrate in the process of the present invention, the adsorbent bed has a more uniform bed temperature. Thus, volatiles tend to adsorb onto the food substrate more rapidly in the process of the present invention.

The process of the present invention also tends to be more economical than liquid nitrogen techniques for volatile recovery. For example, the cost of dry ice is approximately two times that of liquid nitrogen per pound. However, because of the significantly greater heat dissipation rates of the process of the present invention, e.g. dry ice can remove generally four times the heat load of liquid nitrogen per pound, the process of the present invention can be as much as 1/3 to 1/2 less expensive than liquid nitrogen techniques for volatile recovery.

The coffee volatile recovery of the process of the present invention is at least qualitatively equal to that of liquid nitrogen volatile recovery techniques. For example, it has been assumed in the prior art that liquid nitrogen temperatures are necessary to recover volatiles having the most coffee-like character. However, it has been found in experiments where coffee volatiles are collected onto a packed column of coffee cooled by liquid nitrogen that a significant portion of the volatiles are collected at the top of the column. The top of the column is generally much warmer than the bottom of the column, e.g. the top of the column has a temperature on the order of about −62,2°C (−80°F). Most volatile components that are important for coffee aroma condense at temperatures at or above −62,2°C (−80°F), e.g. hydrogen sulfide. The use of solid coolants such as dry ice which vaporize above −78,9°C (−110°F) permits the collection of these key coffee volatiles where there is sufficient agitation to permit efficient heat transfer as in the process of the present invention. Also, because there is an increased surface area in the rapid agitated mixture of coolant and substrate, more volatiles are adsorbed in the process of the present invention.

F. Description of the product

It has been found that the process of the present invention can be used to form novel aromatized coffee substrates. Roast and ground and flaked coffees aromatized according to the process of the present invention using dry ice as the coolant have been analyzed by gas chromatographic techniques and compared to gas chromatograms of roast and ground coffee and flaked coffee which were aromatized by direct condensation of coffee volatiles with liquid nitrogen as the coolant. It has been found that roast and ground and flaked coffee aromatized according to the process of the present invention have a lesser percentage of low-boiling and a greater percentage of high-boiling volatiles adsorbed thereon compared to roast and ground and flaked coffee aromatized by direct condensation of volatiles using liquid nitrogen as the coolant.

The fact that differing percentages of these volatiles are adsorbed does not result in detrimental aroma character for these coffees. Roast and ground coffee and flaked coffee aromatized by the process of the present invention with dry ice as the coolant have been perceived by expert panelists as being almost identical in aroma character and intensity to these same coffees aromatized by direct condensation via liquid nitrogen volatile recovery techniques. The similarity in aroma character indicates that the chemical constituents required for good aroma character have been transferred to the coffee with minimal thermal degradation of the labile components. Indeed, roast and ground and flaked coffee aromatized according to the process of the present invention with dry ice as the coolant can be more desirable because of the perceived sharper and more lingering character of the aroma. Further, the aromatized coffee substrates formed by the process of the present invention have been found by gas chromatography to typically have high physical aroma intensities, e.g. aroma intensities on the order of about 300,000 to 400,000 G.C. counts.

While it is possible to package the novel aromatized roast and ground and flaked coffee substrates made according to the process of the present invention as is, it is usually desirable to combine a minor amount, e.g. about 1—20% by weight, of the aromatized substrate with a major amount of non-aromatized, conventionally produced coffee materials. A method for combining the aromatized/non-aromatized blend is to first place the aromatized substrate at the bottom of the container. It is extremely desirable to keep this aromatized substrate below −17,8°C (0°F) in order to insure that the volatiles are not lost unnecessarily. Next, the non-aromatized coffee material is placed on top of the aromatized substrate and the container sealed. The volatiles from the aromatized substrate pass through the non-aromatized coffee materials and equilibrate therewith. On opening the container, the head space above the aromatized/non-aromatized blend develops a pleasant, intense coffee aroma.

In the case of aromatized oil such as coffee oil, the aromatized oil is normally added to an instant (soluble) coffee product. A preferred method is drop-wise addition of the oil to the coffee product. See U.S. Patent 3,769,032 to Lubsen et al, issued Oct. 30, 1972, herein incorporated by reference. The aromatized oil can typically be added to the instant coffee product at amounts of from about 0.05 to 0.8% by weight of the coffee product.

G. G.C. Count Measurement

A suitable technique for measuring actual aroma intensity of aromatized products made according to the process of the present invention is gas chromatography. A flame ionization gas chromatograph analytical instrument measures the total content of organic compounds in a gas head space or void space sample from a packaged product on a scale of relative intensity. The scale is graduated in microvolt-seconds (referred to herein as "G.C. counts") which is a measure of the area under the intensity curve, and the result is reported as an integration of the total area under the curve in total microvolt-seconds ("total counts"). The resulting G.C. count number is a measurement of the concentration of aroma volatiles in the head or void space of the sample.

The chromatograph comprises a 91,4 cm (36") chromosorb WAW (acid washed) 60/80 mesh column of 6,4 mm (1/4") diameter and is housed in an oven section for isothermal temperature control. The column is packed with a uniform-sized solid called the solid support, but is not coated with a nonvolatile liquid (called the substrate) because the gas is not to be separated into individual compounds as is commonly done in this type of analysis. A hydrogen flame detector is used at the outlet port. An electrometer receives the output signal from the flame detector and amplifies it into a working input signal for an integration. The integrator both sends a display signal to a recorder to print out the response curve and electronically integrates the area under the curve.

The gas sample is injected into a heated injection port, and is immediately swept into the packed column by a carrier gas flow. The non-separated gas mixture is swept as a compact band through the column and into the detector. The detector then ionizes the sample and generates an electrical signal proportional to the concentration of the materials in the carrier gas. The ionized gases and carrier gas are then vented from the unit.

A Hewlett Packard gas chromatograph (Model 700), electrometer (Model 5771A), integrator (Model 3370A), and recorder (Model 7127D), range 0—5 mv. and temperature controller (Model 220) are used. Nitrogen pressure in the column is approximately 110 kPa (16 psig). Air pressure of 165 kPa (24 psig) is used to flush out the detector. An oven temperature of 100°C is used and maintained to keep the volatiles vaporized. The hydrogen is supplied from a gas cylinder regulated at 206 kPa (30 psig).

Each peak is measured in counts, the counts being first measured by the flame detector and then both integrated and recorded. The number of counts for a particular component is directly proportional to the number of milligrams of that component in the vapor sample.

The recorder is synchronized with the integrator as follows:

1. Calibration

A standard methane gas is used to precisely set the flame ionization response. Prior to analyzing the samples, a 1 cc. sample of gas is obtained from a gas cylinder (0.5% by weight of $CH_4$). The pressure of the gas as it is obtained is 27,5 kPa (4 psi). The gas sample is syringed into the inlet port of the gas chromatograph. The attenuation of the recorder is set at 8 while the range is 10. The total counts when the procedure is repeated three times average between 145,000 to 150,000 total counts. If the average is not within the specified range, the carrier gas flow rate is adjusted.

2. Sample analysis

The sample is typically vacuum packed for at least 3 days at 23,9°C±1,6°C (75°±5°F) before sampling. The amount of coffee packed and the pressure within the canister is evaluated to insure that the sample will give a representative measurement. The vacuum-sealed canister of coffee is punctured to remove the vacuum, then resealed with oxygen impermeable metallic coated tape and allowed to equilibrate at least one hour at 23,9°C±1,6°C (75°±5°F) to allow vapor phase equilibration.

After equilibration, a 1 cc. sample of the aromatic atmosphere of the canister headspace/voidspace is taken again using the same type of syringe as used for the standard methane sample. The gas sample is then injected into the inlet port of the gas chromatograph.

For roast and ground and flaked coffee products, the sample is normally taken from a 384 cc (13 oz.) or 473 cc (16 oz). size can packed under normal coffee packing conditions. However, differences in the can size or the amount of coffee packed do not generally create significant differences in G.C. count measurements unless the can is grossly underfilled.

8

# O 028 043

Best mode

The following examples are intended to exemplify the present invention and are not limiting thereof:

Example 1

Sixty pounds of flaked coffee was added to a chilled 0,28 m³ (10 ft.³) capacity paddle mixer 91 cm (3 ft.) in length with 55 cm (1.8 ft.) diameter impeller). The mixer was chilled to an inside skin temperature of −101,1°C (−150°F) by circulating liquid nitrogen through the jacket of the mixer. 16,3 kg (Thirty-six pounds) of powdered dry ice of the following particle size distribution was added to the flaked coffee:

| % Retained on screen | Screen size (U.S. mesh no.) |
|---|---|
| 40 | +20 |
| 10 | +30 |
| 25 | +40 |
| 25 | +70 |

The resultant dry ice/coffee mixture was agitated at 47,4 m (156 ft.)/min. tip speed to reach an equilibrium bed temperature of −76,1°C (−105°F). An additional 54,4 kg (120 lbs.) of crushed dry ice was then added to the dry ice/coffee mixture.

Grinder gases were generated by grinding a commercial coffee blend roasted to a color of 73—81 photovolts (see Sivetz, *Ibid*, Vol. II, at pp. 132—138 for measuring the color of coffee by photoelectric devices) in a Model 66 Gump grinder. The grinder was equipped with grinder gas take-off ports mounted beneath the grinder rolls and on the normalizer. The coffee blend was ground at a rate of 313 kg (690 lbs.)/hr. to a drip particle size distribution. Grinder gas was drawn off at a rate of 0,193 m³ (6.8 ft.³)/min. via a compressor operating at about 6.87 kPa (1 psig) discharge pressure. The grinder gas was passed through the rapidly agitated (approx. 114 m (374 ft.)/min. tip speed) bed of particulated flaked coffee. Visual inspection of the agitated bed indicated a two-fold expansion in volume of the bed. The bed temperatures ranged from −73,3°C (−100) to −78,9°C (−110°F) during the 3-1/2 hours of the aromatization run. The amount of aroma measured in the gas stream averaged 13,663 G.C. counts/cc in the grinder gas feed into the mixer and 2431 G.C. counts/cc on exiting from the mixer, thus indicating 82% of the volatiles were recovered.

At the completion of the aromatization run, approximately 1197 kg (2,640 lbs.) of coffee had been ground to aromatize the dry ice/coffee mixture. The aromatized mixture was removed from the mixer and stored at −62,2°C (−80°F) in 3,78 l (1 gallon) glass containers. Dry ice granules (approximately 1,6 mm (1/16 in.) in diameter) were visible in the mixture. The mixture was held for 7 days at −62,2°C (−80°F) to separate the residual dry ice from the aromatized flaked coffee. The intensity of the aromatized coffee was determined by first blending about 10% of the aromatized flaked coffee with 90% non-aromatized flaked coffee and then sealing the blend in a 0,453 kg (1 lb.) can under vacuum. After allowing the blend to equilibrate for at least 12 hours, the aroma headspace intensity was measured by gas chromatography. The intensity of the 10% aromatized/90% non-aromatized flaked coffee blend was found to be 44,073 G.C. counts/cc. The intensity of the aromatized flaked coffee was determined to be 343,600 G.C. counts/cc.

Example 2

In order to establish the optimum time and temperatures for controlled sublimation of coolant from a coolant/substrate mixture, 3,78 l. (1 gallon) jars of an aromatized dry ice/flaked coffee mixture prepared in Example 1 were equilibrated under a variety of temperature conditions:

| Temp. °C (°F) | Flaked coffee intensity (G.C. counts) | | | |
|---|---|---|---|---|
| | 1st day | 5th day | 7th day | 11th day |
| −17,8 (0) | 143,900 | 154,600 | 153,900 | 121,800 |
| −40 (−40) | 148,600 | 255,100 | 262,300 | 184,700 |
| −62,2 (−80) | 237,100 | 325,300 | 343,600 | 283,700 |

As shown above, maximum transfer of aroma to the flaked coffee occurred at temperatures near the dry ice sublimation point (approximately −78,9°C (−110°F) after approximately 7 days. Longer equilibration times result in excessive volatile losses in open equilibration vessels.

Example 3

An alternative coolant separation technique of pressure fixation of volatiles onto the substrate was evaluated. The dry ice/flaked coffee mixture prepared in Example 1, which had been stored at −62,2°C (−80°F) for 1 day, was placed in a 1,36 kg (3 lb.) batch pressure bomb which had been

9

O 028 043

chilled to dry ice temperatures (approximately −78,9 (−110°F)). The bomb was sealed and placed in an agitated hot water bath. The pressure in the bomb was permitted to build up to 1031 kPa (150 psig) over an hour time period. The pressure in the bomb was then slowly vented to atmospheric pressure for an additional 2 hour time period. Then the bomb was opened and the contents sealed in jars with tight-fitting lids. A 10% aromatized/90% unaromatized flaked coffee mixture was found to have an aroma intensity of 43,650 G.C. counts. The intensity of the aromatized flaked coffee was determined to be 320,350 G.C. counts.

Example 4

An aromatized flaked coffee prepared in Example 1 equilibrated for 7 days at −62,2°C (−80°F), was added to non-aromatized flaked coffee in 0,227 kg (1/2 lb.) cans and then vacuum sealed. The mixture of aromatized and non-aromatized flaked coffee was allowed to equilibrate for a minimum of 5 days. The aroma intensity of a variety of aromatized/non-aromatized flaked coffee blends were as follows:

| Amount of aromatized flaked coffee (weight%*) | Aroma intensity (G.C. counts) |
| --- | --- |
| 0 | 10,790 |
| 20 | 37,830 |
| 30 | 52,360 |
| 40 | 59,165 |
| 50 | 71,570 |

*of the mixture of aromatized and non-aromatized coffee

As shown above, the aroma intensity of the various blends was directly proportional to the amount of aromatized flaked coffee added. Each of the blends were characterized by a good fidelity coffee aroma upon opening of the can.

Example 5

22,7 kg (Fifty lbs.) of fine grind roast and ground coffee was added to a chilled 0,28 m³ (10 ft.³) capacity paddle mixer. The mixer was chilled to an inside skin temperature of −73,3°C (−100°F) by agitating 22,7 kg (50 lbs.) of dry ice therein for approximately 1/2 hours. 46,7 kg (One hundred three lbs.) of powdered dry ice, having a particle size distribution similar to that of Example 1, was added to the roast and ground coffee. The resultant dry ice/coffee mixture was agitated at a tip speed of 114,6 m (376 ft.)/min. Visually, the agitated dry ice/coffee mixture had expanded in volume similar to that of a fluidized bed.

Grinder gases were generated by grinding a commercial blend of coffee roasted to a color of 75—85 photovolts, as described in Example 1. The coffee was ground at a rate of 181,4 kg (400 lbs.)/hr. to a drip particle size distribution. The grinder gas was drawn off at a rate of 0,12 m³ (4.4 ft.³)/min. via a compressor operating at 1 psig discharge pressure. The grinder gas was passed through the agitated dry ice/coffee mixture as described in Example 1. The bed temperature of the mixture ranged from −73,3°C (−100°F) to −76,1°C (−105°F) during the 2-1/2 hour aromatization run. The aroma intensity measured in the grinder gas feed into the mixer averaged 21,600 G.C. counts/cc. and 1700 G.C. counts/cc. on exiting from the mixer, thus indicating 92% of the aroma volatiles were recovered by the mixture of dry ice/roast and ground coffee.

At the completion of the aromatization run, approximately 453,6 kg (1,000 lbs.) of coffee had been ground to aromatize the dry ice/roast and ground coffee mixture. The aroma-laden mixture was removed from the mixer and stored at −62,2°C (−80°F) in a metal container. 21,8 kg (Forty-eight lbs.) of a representative dry ice/roast and ground coffee sample was equilibrated. After equilibration for four days, approximately 5 kg (11 lbs.) of dry ice was volatilized. The intensity of the aromatized roast and ground coffee after 7 days storage at −62,2°C (−80°F) was determined via the procedure outlined in Example 1. The aroma intensity of the aromatized roast and ground coffee was determined to be 164,600 G.C. counts.

Example 6

The aroma volatile profile of a roast and ground coffee prepared in Example 5 (Dry Ice R&G Coffee), and roast and ground coffee aromatized by direct condensation of aroma volatiles on a packed bed of coffee cooled by liquid nitrogen (Liquid Nitrogen R&G Coffee) were determined by gas chromatography and compared. A Perkin-Elmer Model 990 gas chromatograph equipped with temperature programming, flame ionization detector and Varian Integrator Model CDS 111 was used. A 18,3 m (60 ft.) long, 0,76 mm (0.03 in.) diameter glass capillary column coated with a thin layer of Carbowax[R]20M and housed in an oven in which the temperature can be controlled and increased according to a specified pattern by the temperature programmer was employed. The hydrogen flame

10

ionization detector was attached to the outlet of the column. The signal generated by the detector was amplified by an electrometer into a working input signal for the integrator. The integrator sent a display signal to a recorder to print out the response curve and to electronically integrate the area under the curve.

The sample preparation and experimental conditions for measuring the volatiles of the aromatized coffee products were as follows: From a vacuum sealed metal 0,45 kg (1 lb.) can, 10 grams of coffee were taken out and put into a 125 ml glass vial covered by a Mininert$^R$ valve, manufactured by Pierce Chemical Company of Rockford, Illinois. The vial was placed in a constant temperature bath for at least half an hour to reach equilibrium. Ten ml. of headspace aroma were taken from the vial by a gas-tight syringe and injected into the sample port of the gas chromatograph by an automatic plunger. Inside the sample port, the volatiles were condensed onto a small cold trap chilled by liquid nitrogen. After all the volatile components condensed, the trap was quickly warmed up to 300°C (572°F) and swept by a nitrogen carrier gas to push the volatile components into the column. The column was held at a temperature of 70°C (158°F) for 3 minutes and was then heated up to 120°C (248°F) at a rate of 4°C. (39°F)/min. Flow rate of the nitrogen carrier gas was 6 ml./min.

The results from the chromatograph, i.e. peak number, time (in minutes) at which the volatile component was recorded, and the percentage of the total area under the gas chromatograph curve which the peak represented, were recorded as follows:

TABLE I

| Dry ice R&G coffee | | | Liquid nitrogen R&G coffee | | |
|---|---|---|---|---|---|
| No. | Time | Area (%) | No. | Time | Area (%) |
| — | — | — | 1 | 1.20 | .58 |
| — | — | — | 2 | 1.36 | .85 |
| 1 | 1.41 | 3.44 | 3 | 1.42 | 5.24 |
| 2 | 1.45 | 3.37 | 4 | 1.46 | 4.33 |
| 3 | 1.51 | 2.34 | 5 | 1.51 | 3.93 |
| 4 | 1.56 | 5.32 | 6 | 1.55 | 7.45 |
| 5 | 1.60 | 32.38 | 7 | 1.61 | 31.07 |
| 6 | 1.67 | 9.92 | 8 | 1.67 | 11.30 |
| 7 | 1.73 | 5.77 | 9 | 1.73 | 5.27 |
| 8 | 1.82 | 23.75 | 10 | 1.82 | 19.71 |
| 9 | 2.02 | 4.77 | 11 | 2.02 | 3.15 |
| 10 | 2.21 | .70 | 12 | 2.20 | .52 |
| — | — | — | 13 | 2.30 | .16 |
| 11 | 2.40 | 3.85 | 14 | 2.40 | 2.85 |
| 12 | 2.51 | .02 | 15 | 2.51 | .02 |
| 13 | 2.71 | .04 | 16 | 2.69 | .03 |
| 14 | 3.09 | .52 | 17 | 3.07 | .43 |
| 15 | 3.29 | .07 | 18 | 3.28 | .06 |
| — | — | — | 19 | 3.47 | .04 |
| 16 | 3.63 | .10 | 20 | 3.62 | .05 |
| 17 | 3.95 | .38 | 21 | 3.94 | .27 |
| 18 | 4.26 | .12 | 22 | 4.24 | .11 |
| — | — | — | 23 | 4.52 | .05 |
| 19 | 4.62 | .18 | 24 | 4.62 | .10 |
| 20 | 5.29 | 1.04 | 25 | 5.27 | .81 |
| 21 | 5.74 | .14 | 26 | 5.72 | .12 |
| 22 | 6.17 | .09 | 27 | 6.15 | .07 |
| 23 | 6.49 | .09 | 28 | 6.47 | .07 |
| 24 | 6.62 | .16 | 29 | 6.60 | .14 |
| 25 | 7.01 | .07 | 30 | 6.99 | .06 |
| 26 | 7.44 | .05 | 31 | 7.42 | .04 |
| 27 | 7.69 | .01 | 32 | 7.67 | .01 |
| 28 | 7.89 | .03 | 33 | 7.86 | .03 |
| 29 | 8.05 | .03 | 34 | 8.03 | .03 |
| 30 | 8.38 | .03 | 35 | 8.39 | .03 |
| 31 | 8.62 | .03 | 36 | 8.63 | .02 |
| 32 | 9.36 | .04 | 37 | 9.34 | .04 |
| 33 | 9.62 | .05 | 38 | 9.56 | .10 |
| 34 | 9.83 | .45 | 39 | 9.87 | .31 |
| 35 | 10.42 | .11 | 40 | 10.40 | .09 |
| 36 | 10.77 | .08 | 41 | 10.75 | .06 |

TABLE I (contd.)

| | Dry ice R&G coffee | | | Liquid nitrogen R&G coffee | |
|---|---|---|---|---|---|
| No. | Time | Area (%) | No. | Time | Area (%) |
| 37 | 11.12 | .06 | 42 | 11.10 | .05 |
| 38 | 11.33 | .03 | 43 | 11.31 | .02 |
| 39 | 11.60 | .04 | 44 | 11.58 | .03 |
| 40 | 12.01 | .08 | 45 | 11.98 | .08 |
| 41 | 12.29 | .04 | 46 | 12.27 | .03 |
| 42 | 13.01 | .21 | 47 | 13.00 | .18 |

Peaks which were recorded at approximately the same time for both the Dry Ice R&G Coffee and the Liquid Nitrogen R&G Coffee are believed to represent the same volatile component. Therefore, the results for the Dry Ice R&G Coffee and the Liquid Nitrogen R&G Coffee have been lined up accordingly. In some cases, peaks were not recorded for the Dry Ice R&G Coffee at certain time intervals. It is believed that either the volatile component was not adsorbed or was present in too small a quantity to be sensed by the detector.

The peaks which were recorded first represent low-boiling volatile components, whereas peaks which were recorded later represent higher boiling volatile components. As can be seen from the above results, the Liquid Nitrogen R&G Coffee has a greater proportion of volatile components than does the Dry Ice R&G Coffee in the 0—1.7 min. range. After the 1.7 minute mark, the Dry Ice R&G Coffee has a greater proportion of volatile components in this range than does the Liquid Nitrogen R&G Coffee. Thus, it can be seen that the volatile component profile of the Liquid Nitrogen R&G Coffee is shifted toward the lower boiling volatile components whereas the volatile component profile of the Dry Ice R&G Coffee is shifted toward the higher boiling volatile components.

Example 7

The volatile component profile of aromatized flaked coffee prepared in Example 1 using dry ice as the coolant (Dry Ice Flaked Coffee) and flaked coffee aromatized by direct condensation of aroma volatiles on a packed bed of coffee cooled by liquid nitrogen (Liquid Nitrogen Flaked Coffee) were determined by gas chromatography and compared. The equipment and method employed for determining the volatile component profiles were the same as in Example 6. The results are as follows:

TABLE II

| | Dry ice flaked coffee | | | Liquid nitrogen flaked coffee | |
|---|---|---|---|---|---|
| No. | Time (min.) | Area (%) | No. | Time (min.) | Area (%) |
| 1 | 1.24 | .04 | 1 | 1.22 | .09 |
| 2 | 1.49 | 5.13 | 2 | 1.48 | 7.10 |
| 3 | 1.54 | 9.69 | 3 | 1.53 | 8.72 |
| 4 | 1.61 | 5.29 | 4 | 1.59 | 5.65 |
| 5 | 1.66 | 8.35 | 5 | 1.64 | 8.12 |
| 6 | 1.72 | 30.90 | 6 | 1.71 | 32.61 |
| 7 | 1.81 | 9.08 | 7 | 1.80 | 8.47 |
| 8 | 1.90 | 4.70 | 8 | 1.89 | 4.34 |
| 9 | 2.01 | 18.03 | 9 | 1.99 | 17.21 |
| 10 | 2.28 | 3.85 | 10 | 2.27 | 3.07 |
| 11 | 2.48 | .29 | 11 | 2.47 | .26 |
| 12 | 2.58 | .29 | 12 | 2.58 | .27 |
| 13 | 2.82 | 2.80 | 13 | 2.83 | 2.29 |
| — | — | — | 14 | 2.99 | .23 |
| 14 | 3.23 | .00 | 15 | 3.24 | .11 |
| 15 | 3.76 | .31 | 16 | 3.77 | .25 |
| 16 | 4.03 | .08 | — | — | — |
| 17 | 4.49 | .04 | — | — | — |
| 18 | 4.90 | .16 | 17 | 4.92 | .12 |
| 19 | 5.31 | .07 | 18 | 5.33 | .03 |
| 20 | 5.73 | .02 | — | — | — |
| 21 | 5.89 | .05 | — | — | — |
| 22 | 6.63 | .44 | 19 | 6.64 | .41 |
| 23 | 6.97 | .02 | — | — | — |
| 24 | 7.21 | .07 | 20 | 7.21 | .05 |
| 25 | 7.73 | .09 | 21 | 7.72 | .11 |

**O 028 043**

TABLE II (contd.)

| | Dry ice flaked coffee | | | Liquid nitrogen flaked coffee | |
| No. | Time (min.) | Area (%) | No. | Time (min.) | Area (%) |
| --- | --- | --- | --- | --- | --- |
| 26 | 8.11 | .04 | 22 | 8.11 | .03 |
| 27 | 8.29 | .06 | 23 | 8.29 | .05 |
| 28 | 8.70 | .03 | — | — | — |
| 29 | 9.17 | .02 | — | — | — |
| 30 | 9.69 | .04 | — | — | — |
| — | — | — | 24 | 9.83 | .08 |
| 31 | 9.98 | .01 | — | — | — |
| 32 | 10.62 | .02 | — | — | — |
| — | — | — | 25 | 11.74 | .05 |
| — | — | — | 26 | 12.00 | .19 |
| — | — | — | 27 | 12.62 | .03 |
| — | — | — | 28 | 13.00 | .01 |
| — | — | — | 29 | 13.32 | .01 |
| — | — | — | 30 | 15.34 | .02 |

As in Example 6, the Liquid Nitrogen Flaked Coffee had a greater proportion of volatile components than the Dry Ice Flaked Coffee in the 0—1.7 minute range. After the 1.7 minute mark, the Dry Ice Flaked Coffee had a greater proportion of volatile components in this range than did the Liquid Nitrogen Flaked Coffee. Thus, as in Example 6, the volatile component profile for Liquid Nitrogen Flaked Coffee was shifted toward the lower boiling volatile components whereas the volatile component profile for the Dry Ice Flaked Coffee was shifted toward the higher boiling volatile Components.

Example 8

45,4 kg (One hundred pounds) of particulated dry ice, having a particle size distribution similar to that of Example 1, was added to a chilled 0,28 m³ (10 ft.³) capacity paddle mixer. The mixer was chilled to an inside skin temperature of −101,1°C (−150°F) by circulating liquid nitrogen through the jacket of the mixer. After addition of the dry ice, the jacket temperature was maintained at −84,4°C (−120°F) for the remainder of the run.

Aroma gases were generated by pulling room through a bed of drip coffee with a vacuum. Aroma gas was drawn-off at a rate of 0,17 m³ (6 ft.³)/min. from approximately 27,2 kg (600 lbs.) of roast and ground product. The aroma gas was passed through the rapidly agitated (approximately 229,8 m (754 ft.)/min. tip speed) bed of particulated dry ice. The bed temperature averaged −79,4°C (−111°F) during the 3 hours of the aromatization run. The amount of aroma measured in the gas stream averaged 11,500 G.C. counts/cc into the mixer and 2027 G.C. counts/cc on exiting from the mixer, thus indicating 82% volatile recovery.

The aromatized dry ice was removed from the mixer and added to flaked coffee, drip coffee, expeller oil and agglomerated/flaked instant coffee. The coffee substrates were cryofied with an excess of liquid nitrogen prior to addition of the aroma bearing dry ice. Each batch was hand mixed to disperse the dry ice/substrate matrix prior to storing at −62,2°C (−80°F) for 3 days. The intensity of the aromatized flaked, drip and instant coffee were determined via the procedure outlined in Example 1. The intensity of the aromatized expeller oil was measured from a 1 cc sample of the headspace of 1 gram of oil in a stoppered 125 ml glass septum bottle equilibrated for 3 hours at (70°±5°F) 23,9°C±1,6°C The intensities of the various coffee products are shown below:

| Coffee material | Lipid content via petroleum ether extraction (%) | Weight % aromatized $CO_2$ addition (%) | Aroma intensity (G.C. count/cc) | Aroma intensity/ aromatized $CO_2$ addition (GC count/%) |
| --- | --- | --- | --- | --- |
| Expeller Oil | 100 | 44 | 40,980 | 931 |
| Flaked Coffee | 12 | 20 | 118,820 | 5,941 |
| Drip Coffee | 7 | 33 | 406,500 | 12,318 |
| Agglomerated/ Flaked Instant | 0.3 | 25 | 1,752,500 | 70,100 |

As shown above, the extent of headspace aroma was strongly dependent on the quantity of lipid

13

**0 028 043**

phase in contact with the aroma bearing dry ice during equilibration. Each of the blends was characterized by a good fidelity coffee aroma upon opening of the can.

**Claims**

1. A method for aromatizing a coffee substrate characterized by:

(a) rapidly agitating particulate dry ice or an intimate particulate mixture of dry ice and solid coffee substrate, the ratio of the amount of dry ice to coffee substrate being from 1:2 to 10:1 by weight, to form an adsorbent bed, having a temperature of from $-101,1°C$ $(-150°F)$ to $-17,8°C$ $(0°F)$, preferably from $-78,9°C$ $(-110°F)$ to $-62,2°C$ $(-80°F)$,

(b) contacting the adsorbent bed with gaseous coffee volatiles to adsorb the aroma and flavor volatiles onto the adsorbent bed;

(c) vaporizing the dry ice to provide an aromatized coffee substrate.

2. A method according to Claim 1 characterized in that a coffee substrate is added to the adsorbent bed if the adsorbent bed is solely particulate dry ice.

3. A method according to Claim 1 characterized by the further step of cryofying the coffee substrate prior to said rapid agitation step.

4. A method according to any preceding Claim characterized in that said rapid agitation step comprises fluidizing the dry ice or mixture of dry ice and solid coffee substrate to form a fluidized adsorbent bed, the fluidization being preferably mechanical fluidization.

5. A method according to any preceding Claim characterized in that the coffee substrate is selected from the group consisting of roast and ground coffee, flaked coffee and mixtures thereof, and in that the coffee substrate comprises an edible oil.

6. A method according to any preceding Claim characterized by a further step of adding unaromatized coffee material after said vaporizing step.

**Revendications**

1. Procédé pour aromatiser un substrat de café, caractérisé par:

(a) l'agitation rapide de glace carbonique divisée ou d'un mélange intime divisé de glace carbonique et de substrat solide de café, le rapport de la quantité de glace carbonique à la quantité de substrat de café étant compris entre 1:2 et 10:1 en poids, pour former un lit adsorbant ayant une température comprise entre $-101,1°C$ $(-150°F)$ et $-17,8°C$ $(0°F)$, de préférence entre $-78,9°C$ $(-110°F)$ et $-62,2°C$ $(-80°F)$;

(b) la mise en contact du lit adsorbant avec les substances volatiles gazeuses du café pour adsorber les substances volatiles facteurs d'arôme et de goût sur le lit adsorbant;

(c) la vaporisation de la glace carbonique pour fournir un substrat de café aromatisé.

2. Procédé selon la revendication 1, caractérisé en ce qu'on ajoute un substrat de café au lit adsorbant si le lit adsorbant est constitué uniquement de glace carbonique.

3. Procédé selon la revendication 1, caractérisé par une étape de "cryogénation" du substrat de café avant l'étape d'agitation rapide.

4. Procédé selon l'une quelconque des revendications précédentes, caractérisé en ce que l'étape d'agitation rapide consiste à fluidiser la glace carbonique ou le mélange de glace carbonique et de substrat de café solide pour former un lit adsorbant fluidisé, la fluidisation étant de préférence une fluidisation mécanique.

5. Procédé selon l'une quelconque des revendications précédentes, caractérisé en ce que le substrat de café est choisi dans le groupe constitué par le café torrifié et moulu, le café en paillettes et des mélanges de ceux-ci, et en ce que le substrat de café contient une huile comestible.

6. Procédé selon l'une quelconque des revendications précédentes, caractérisé par une étape supplémentaire d'addition de matériau de café non aromatisé après l'étape de vaporisation.

**Patentansprüche**

1. Verfahren zur Aromatisierung eines Kaffeesubstrats, dadurch gekennzeichnet, daß man:

(a) stückiges Trockeneis oder ein inniges stückiges Gemisch aus Trockeneis und festem Kaffeesubstrat schnell rührt, wobei das Gewichtsverhältnis der Menge an Trockeneis zu Kaffeesubstrat von 1:2 bis 10:1 ist, unter Bildung eines Adsorbensbettes mit einer Temperatur von $-101,1°C$ $(-150°F)$ bis $-17,8°C$ $(0°F)$, vorzugsweise von $-78,9°C$ $(-110°F)$ bis $-62,2°C$ $(-80°F)$,

(b) das Adsorbensbett mit gasförmigen flüchtigen Kaffeebestandteilen kontaktiert zur Adsorption der flüchtigen Aroma- und Geschmacksbestandteile an das Adsorbensbett und,

(c) das Trockeneis verdampft, um ein aromatisiertes Kaffeesubstrat zu liefern.

**0 028 043**

2. Verfahren nach Anspruch 1, dadurch gekennzeichnet, daß man ein Kaffeesubstrat dem Adsorbensbett zusetzt, wenn das Adsorbensbett nur stückiges Trockeneis ist.

3. Verfahren nach Anspruch 1 gekennzeichnet durch die weitere Stufe, das Kaffeesubstrat vor der schnellen Rührstufe tiefzukühlen.

4. Verfahren nach einem der vorstehenden Ansprüche, dadurch gekennzeichnet, daß die schnelle Rührstufe die Fluidisierung des Trockeneises oder eines Gemischs aus Trockeneis und festem Kaffeesubstrat umfaßt unter Bildung eines Fließadsorbensbettes, wobei die Fluidisation vorzugsweise eine mechanische Fluidisation ist.

5. Verfahren nach einem der vorstehenden Ansprüche, dadurch gekennzeichnet, daß das Kaffeesubstrat ausgewählt ist aus der Gruppe bestehend aus geröstetem und gemahlenem Kaffee, Kaffeeflocken und Gemischen davon und daß das Kaffeesubstrat ein eßbares Öl enthält.

6. Verfahren nach einem der vorstehenden Ansprüche gekennzeichnet durch die weitere Stufe, nichtaromatisiertes Kaffeematerial nach der Verdampfungsstufe zuzusetzen.

15